# EUROPEAN PATENT APPLICATION

(11) **EP 4 044 542 A1**
(43) Date of publication of application: **17.08.2022**
(21) Application number: 19949537.5
(22) Date of filing: 16.10.2019
(51) Int. Cl.: H04L 29/04

(54) **METHOD AND APPARATUS FOR SUBSCRIBING TO RESOURCE**

(71) Applicant: GUANGDONG OPPO MOBILE TELECOMMUNICATIONS CORP., LTD., Dongguan, Guangdong 523860 (CN)
(72) Inventor: LV, Xiaoqiang, Dongguan, Guangdong 523860 (CN); ZHANG, Jun, Dongguan, Guangdong 523860 (CN)
(74) Representative: Ipside
(86) International application number: PCT/CN2019/111436
(87) International publication number: WO 2021/072672

(57) **Abstract**

Provided in the present application is a method for subscribing to a resource that is applied in the Internet of Things, the method comprising: a subscribing device sends a request message to a target device, the request message requesting that a notification condition associated with the subscribing device be configured for the target device; and the subscribing device receives from the target device a response message for the request message. Since a notification condition configured by the target device for a target resource is a notification condition associated with the subscribing device, the subscribing device can thus configure a personalized notification condition, thereby increasing the degree of intelligence of an Internet of Things device.

## Description

### BACKGROUND

### Technical Field

The present application relates to the field of communications, and in particular, to a method and an apparatus for subscribing to a resource.

### Description of Related Art

In the Internet of Things (IoT), a subscribing device can subscribe to a target resource of a target device. For example, a user may subscribe to the temperature of a thermometer through a mobile phone, and when the temperature of the thermometer is greater than or equal to 26 degrees, the air conditioner is turned on. The mobile phone, thermometer, and temperature mentioned above respectively are the subscribing device, the target device, and the target resource.

In the above instance, the thermometer sends a notification message to the mobile phone when the temperature is greater than or equal to 26 degrees, so that the mobile phone can turn on the air conditioner. Herein, "the temperature is greater than or equal to 26 degrees" is the notification condition for the thermometer to send the notification message, and the period for sending the notification message is also the notification condition. Any subscribing device that has access to the thermometer may modify the notification condition. When multiple subscribing devices configure different notification conditions, the thermometer may send a notification message according to the last configured notification condition, which invalidates the notification conditions configured by some subscribing devices.

### SUMMARY

The present application provides a method and an apparatus for subscribing to a resource which allows a subscribing device to configure a personalized notification condition.

In the first aspect, the present application provides a method for subscribing to a resource, and the method includes the following steps. A subscribing device sends a request message to a target device. The request message requests that a notification condition associated with the subscribing device to be configured for a target resource. The subscribing device receives a response message for the request message from the target device.

Since the notification condition configured by the target device for the target resource is a notification condition associated with the subscribing device, the subscribing device can thus configure a personalized notification condition, thereby increasing the degree of intelligence of an Internet of Things device.

In the second aspect, the present application further provides another method for subscribing to a resource, and the method includes the following steps. A target device receives a request message from a subscribing device. The request message requests that a notification condition associated with the subscribing device to be configured for a target resource. The target device sends a response message for the request message to the subscribing device.

Since the notification condition configured by the target device for the target resource is a notification condition associated with the subscribing device, the subscribing device can thus configure a personalized notification condition, thereby increasing the degree of intelligence of an Internet of Things device.

In the third aspect, the present application further provides an apparatus for subscribing to a resource, and the apparatus may implement the method and corresponding function provided in the first aspect. The function may be implemented through hardware and may also be implemented through hardware by executing corresponding software. The hardware or software includes one or more units or modules corresponding to the function.

In one possible design, the apparatus is a terminal device or a chip. The device may include a processing unit and a transceiving unit. When the device is a terminal device, the processing unit may be a processor, and the transceiving unit may be a transceiver. The terminal device may further include a storage unit, and the storage unit may be a memory. The storage unit is used to store a command, and the processing unit executes the command stored in the storage unit, so that the terminal device executes the method described in the first aspect. When the device is a chip in the terminal device, the processing unit may be a processor, and the transceiving unit may be an input/output interface, a pin, or a circuit, etc. The processing unit executes the command stored in the storage unit, so that the terminal device including the chip executes the method described in the first aspect. The storage unit may be a storage unit (e.g., a register, a cache, etc.) in the chip, or a storage unit (e.g., a read-only memory, a random access memory, etc.) located outside the chip in the terminal device.

In the fourth aspect, the present application further provides another apparatus for subscribing to a resource, and the apparatus may implement the method and corresponding function provided in the second aspect. The function may be implemented through hardware and may also be implemented through hardware by executing corresponding software. The hardware or software includes one or more units or modules corresponding to the function.

In one possible design, the apparatus is a network device or a chip. The device may include a processing unit and a transceiving unit. When the device is a network device, the processing unit may be a processor, and the transceiving unit may be a transceiver. The network device may further include a storage unit, and the storage unit may be a memory. The storage unit is used to store a command, and the processing unit executes the command stored in the storage unit, so that the network device executes the method described in the second aspect. When the device is a chip in the network device, the processing unit may be a processor, and the transceiving unit may be an input/output interface, a pin, or a circuit, etc. The processing unit executes the command stored in the storage unit, so that the network device including the chip executes the method described in the second aspect. The storage unit may be a storage unit (e.g., a register, a cache, etc.) in the chip, or a storage unit (e.g., a read-only memory, a random access memory, etc.) located outside the chip in the network device.

In the fifth aspect, the present application further provides a computer readable storage medium. The computer readable storage medium stores a computer program, and when the computer program is executed by a processor, the processor executes the method described in the first aspect.

In the sixth aspect, the present application further provides a computer readable storage medium. The computer readable storage medium stores a computer program, and when the computer program is executed by a processor, the processor executes the method described in the second aspect.

In the seventh aspect, the present application further provides a computer program product including a computer program code. When the computer program code is executed by a processor, the processor is enabled to execute the method described in the first aspect.

In the eighth aspect, the present application further provides a computer program product including a computer program code. When the computer program code is executed by a processor, the processor is enabled to execute the method described in the second aspect.

In the ninth aspect, the present application further provides a computer program enabling a computer to execute the method described in the first aspect when running on the computer.

In the tenth aspect, the present application further provides a computer program enabling a computer to execute the method described in the second aspect when running on the computer.

### BRIEF DESCRIPTION OF THE DRAWINGS

FIG. 1 is a schematic diagram of an IoT system suitable for the present application.
FIG. 2 is a schematic diagram of a method for subscribing to a resource provided by the present application.
FIG. 3 is a schematic diagram of another method for subscribing to a resource provided by the present application.
FIG. 4 is a schematic diagram of still another method for subscribing to a resource provided by the present application.
FIG. 5 is a schematic view of an apparatus for subscribing to a resource provided by the present application.
FIG. 6 is a schematic view of another apparatus for subscribing to a resource provided by the present application.
FIG. 7 is a schematic diagram of an IoT device provided by the present application.

### DESCRIPTION OF THE EMBODIMENTS

The accompanying drawings are included to provide description of the technical solutions provided in the embodiments of the present application.

A method provided by the embodiments of the present application may be applied in an IoT system. A subscribing device and a target device to be provided in the following paragraphs may be devices in the home IoT, such as mobile phones, tablets, routers, wearable devices, air conditioners, lights, water meters, etc., or may be smart devices in the fields of smart security, air monitoring, and air monitoring. These devices may all work in an IoT environment, that is, the devices may perform IoT communication. Among these IoT devices, devices that can configure other devices may be called onboarding tools (OBTs), such as mobile phones, tablets, etc., while devices that cannot configure other devices may be called non-OBT devices.

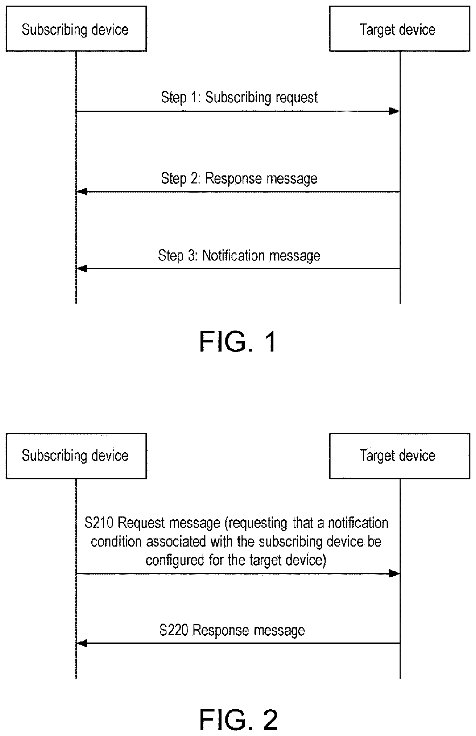

FIG. 1 is a schematic diagram of an IoT system suitable for the present application.

In step 1, a subscribing device sends a subscribing request to a target device. A message type of the subscribing request may be retrieving, and the subscribing request may include the following parameters:
message originator (from, Fr): a device identifier of the subscribing device;
message recipient (To): an identifier of a resource subscribed by the subscribing device;
message identifier (request identifier, Ri): a request identifier, used to complete binding of a request and a response;
operation type (OP): an operation type is generally one of creating, updating, retrieving, deleting, and notifying (CURDN); and
subscription identifier (observe, Obs).

In step 2, after receiving the subscribing request, the target device authenticates the subscribing request, establishes a monitoring mechanism, and replies a response message to the subscribing device. The response message is used to notify the subscribing device that the target device has received the subscribing request and started to monitor a change of a target resource.

In step 3, after monitoring that the target resource requested by the subscribing device to subscribe changes, the target device may send a notification message to the subscribing device. The request identifiers (Ri) of the above three messages are the same.

If the subscribing device needs to unsubscribe content, the subscribing device may send the subscribing request in step 1 again and sets the Obs parameter to unsubscribing.

If the subscribing device needs to subscribe to other content, the subscribing device may modify a Query part of the To parameter, and a form of the Query part can be ?if="special Interface". In other words, subscriptions that use different if parameters are considered different subscriptions.

In addition, if the resource type (rt) parameter of the target resource includes oic.r.value.contional or not, it means that a condition (i.e., the notification condition) for notification message generation corresponding to the target resource may be set. The notification condition of the target resource may be described in the following form:

```
          {
         Threshold: //generate a notification message when a value change range of the target
         resource is greater than the threshold
         Minnotifyperiod: //a minimum period between two adjacent notification messages
         Maxnotifyperiod: //a maximum period for sending notification messages, that is,
         generate a notification message when a time period
 between current time and generation time of
         the previous notification message is equal to this value.
          }
```

When oic.r.value.contional is set, all notification messages of the target resource associated with the resource need to comply with the above notification condition.

Under the current technical framework, after a subscribing device configures the notification condition of the target resource, other subscribing devices need to receive notification messages according to the notification condition, and personalized notification conditions cannot be configured. A method for subscribing to a resource provided by the present application is described as follows.

As shown in FIG. 2, a method 200 includes the following steps.

In S210, a subscribing device sends a request message to a target device. The request message requests that a notification condition associated with the subscribing device to be configured for a target resource.

Correspondingly, the target device receives the request messages from the subscribing device.

The target resource is, for example, temperature, and the target resource may be described in the following manner:

```
           /targettemperature //href of the resource, may be understood as an instance name
           {
             rt: oic.r.temperature //resource name
             if:oic.if.a.oic.if.baseline //interface supported by the resource
             p: 3 //support discovery and subscribing
             temperature: 20 //temperature value
             unit: "°C" //temperature unit }
```

If the subscribing device subscribes to the target resource, when a status of the target resource changes, the target device may send a notification message to the subscribing device. For example, after the subscribing device subscribes to the temperature, if the subscribing device does not configure a notification condition associated with the temperature, any change in the value of the temperature may trigger the target device to generate a notification message to notify the subscribing device.

Optionally, before the subscribing device sends the request message to the target device, the subscribing device may determine whether the target resource supports configuring the notification condition associated with the subscribing device.

If the target resource does not support configuring the notification condition, the subscribing device does not need to send a request message to save signaling costs, and if the target resource supports configuring the notification condition, the subscribing device may send a request message.

Optionally, after receiving the request message, the target device may determine whether the target resource supports configuring the notification condition associated with the subscribing device.

If the target resource does not support configuring the notification condition, the target device determines not to configure the notification condition associated with the subscribing device, and if the target resource supports configuring the notification condition, the target device may configure the notification condition associated with the subscribing device in the following manner.

```
         /targettemperature
          {
            rt:oic.r.temperature, oic.r.value.conditional
            if: oic.if.a, oic.if.rw, oic.if.baseline
            resources:
            {
              [ href:/targettemperature
                 rt :oic.r.temperature
                 if :oic.if.a, oic.if.baseline
                 temperature: 20
                 unit:"C"
              ]
              [ href:/notifyconditional //one uri that is generated
                 owner: observer1
                 if :oic.if.rw, oic.if.baseline
                 rt :oic.r.value.conditional
                 targetResource:/targettemperature
                 threshold: 1
                 minnotifyperiod:2
                 maxnotifyperiod:5 ]
            }
          }
```

Herein, the href parameter is an identifier (ID) of the notification condition instance, and the owner parameter is an identifier of the subscribing device associated with the notification condition. The notification condition includes at least one parameter provided as follows: a threshold for notification message generation, a minimum time period between two adjacent notification messages (minnotifyperiod), and a maximum time period between two adjacent notification messages (maxnotifyperiod).

Optionally, an instance identifier of the notification condition may also be generated based on the identifier of the subscribing device. For example, the observer id may act as the ID of the instance, that is, href: observer id. The function of the href parameter is equivalent to identifying the association relationship between the instance and the subscribing device.

The instance of the notification condition may also include the identifier of the target resource associated with the notification condition, as shown in the abovementioned targetResource:/targettemperature.

Besides, the above instance is an instance in which the target resource and the notification condition are configured at the same time, and the target resource and the notification condition may also be configured separately. For example, in the notification condition instance, the parameters of the target resource, subscribing device, and notification condition are added.

After performing corresponding processing based on the request message, the target device may generate a response message for the request message and sends the response message to the subscribing device. Correspondingly, the subscribing device may perform the following steps.

In S220, the subscribing device receives the response message for the request message.

Optionally, the response message includes indication information indicating whether the notification condition is successfully configured. When the indication information indicates that the notification condition is successfully configured, the response message may further include the notification condition. When the indication information indicates that the notification condition is not successfully configured, the response message does not include the notification condition.

Since the notification condition configured by the target device for the target resource is a notification condition associated with the subscribing device, the subscribing device can thus configure a personalized notification condition, thereby increasing the degree of intelligence of an Internet of Things device.

After configuring the notification condition, the target device may register the notification condition to a notification message generation function, that is, it is determined whether a notification message is generated according to the notification condition.

For example, if the notification condition is to notify the subscribing device when the temperature is greater than 20 degrees, then when the ambient temperature is greater than 20 degrees, the target device generates a notification message and sends the notification message to the subscribing device.

In addition, the subscribing device may subscribe to the target resource and configure the notification condition of the target resource at the same time, or the subscribing device may subscribe to the target resource first and then configures the notification condition of the target resource next. These two situations are described in the following paragraphs.

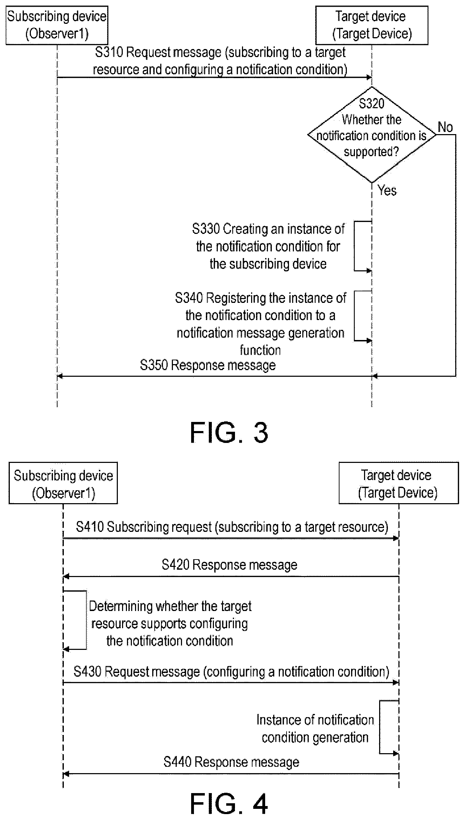

As shown in FIG. 3, a method 300 includes the following steps.

In S310, a subscribing device sends a request message to a device (i.e., a target device) where a target resource is located, and the request message includes a subscription parameter for subscribing to the target resource and a configuration parameter for configuring a notification condition. The configuration parameter of the notification condition is located in a query part after a uniform resource identifier (URI) of a subscribing request, and the form is as follows: Get /targetresource?threshold=A & maxnotifyperiod=B & minnotifyperiod=C. The above subscribing request including three parameters acts as an example only, and the subscribing request may further include any one or two of these three parameters.

In S320, after receiving the request message, the target device may determine whether the target resource supports configuring notification condition. Such determination may be made by determining whether the rt parameter of the target resource includes oic.r.value.conditional. If the rt parameter of the target resource includes oic.r.value.conditional, it may be determined that the target device supports configuring the notification condition. If the rt parameter of the target resource does not include oic.r.value.conditional, it may be determined that the target device does not support configuring the notification condition. The foregoing embodiment is an example of determining whether the target resource supports configuring the notification condition provided by the present application, and other methods for determining whether the target resource supports configuring the notification conditions are also applicable to the present application.

In S330, if the target resource supports configuring the notification condition, the target device may create an instance of the notification condition in the target resource according to the configuration parameter in the query part of the subscribing request. For example, the method 200 includes the instances of the herf parameter and the owner parameter. The instance is an instance of implementation of the association with the target resource, the subscribing device, and the notification condition, and the target resource, the subscribing device, and the notification condition may also be associated in other ways.

In S340, the instance of the notification condition is registered to the notification message generation function. The target resource, the subscribing device, and the notification condition may be stored on a message generating unit. In this way, the target device may determine whether to generate a notification message for the subscribing according to whether a current situation satisfies the notification condition.

For example, when the notification condition is "generate a notification message when the temperature is greater than 20 degrees", if the current temperature is 18 degrees, the target device determines not to generate a notification message for the subscribing device, and if the current temperature is 20 degrees, the target device determines to generate a notification message for the subscribing device.

In S350, a response message is sent to the subscribing device. If the notification condition is successfully configured, the response message may include the notification condition to indicate that the notification condition is successfully configured. If the notification condition is not successfully configured, for example, the target resource does not support configuring the notification condition, the response message may not carry any notification condition to indicate that the notification condition is not configured successfully.

In the embodiments described above, resource subscription and configuration of the notification condition are implemented in one process. In the embodiments to be described in the following paragraphs together with FIG. 4, resource subscription and configuration of the notification condition are implemented in two processes.

As shown in FIG. 4, a method 400 includes the following steps.

In S410, a subscribing device sends a subscribing request to a target device. Herein, the To parameter indicates a target resource, and the Obs parameter indicates that a current message is a subscribing request.

In S420, after receiving a response message of successful subscription, the subscribing device initiates a process of detecting whether the target resource may configure a notification condition. Optionally, the subscribing device may detect whether the rt parameter of the target resource includes oic.r.value.conditional. If the rt parameter of the target resource includes oic.r.value.conditional, it may be determined that the target device supports configuring the notification condition. If the rt parameter of the target resource does not include oic.r.value.conditional, it may be determined that the target device does not support configuring the notification condition. The foregoing embodiment is an example of determining whether the target resource supports configuring the notification condition provided by the present application, and other methods for determining whether the target resource supports configuring the notification conditions are also applicable to the present application.

In S430, a request message is sent to request an instance of oic.r.value.conditional to be generated in the target resource. The request message may include at least one parameter in threshold, maxnotifyperiod, and minnotifyperiod.

The target device may generate an instance of oic.r.value.conditional in the target resource according to the method in S320 to S340, that is, modify the target resource.

In S440, the response message is received.

If the notification condition is successfully configured, the response message may include the notification condition to indicate that the notification condition is successfully configured or to indicate that the modification of the target resource is successful. If the notification condition is not successfully configured, for example, the target resource does not support configuring the notification condition, the response message may not carry any notification condition to indicate that the notification condition is not successfully configured or to indicate that the modification of the target resource fails.

In the method 200 to method 400, the subscribing device requests to configure the notification condition related to the subscribing device. Optionally, the subscribing device may also request the configuration of a global notification condition. That is, after the target device configures the notification condition for the target resource, the notification condition is applicable to all subscribing devices. For example, the target device may configure the owner parameter of the instance in the method 200 as a global identifier to indicate that all subscribing devices need to use the notification condition in the instance.

The instances of the method for subscribing to a resource provided by the present application are described in detail above. It can be understood that, in order to implement the above-mentioned functions, an apparatus for subscribing to a resource includes hardware structures and/or software modules corresponding to each function. A person having ordinary skill in the art shall be easily aware that in combination with the disclosed embodiments, the described exemplary units and algorithm steps may be implemented by hardware or a combination of hardware and computer software in the present application. Whether a specific function is executed by hardware or by computer software-driven hardware depends on the specific application and design constraint conditions of the technical solution. Professionals and technicians can use different methods for each specific application to implement the described functions, but such implementation should not be considered beyond the scope of the present application.

In the present application, the apparatus for subscribing to a resource may be divided into functional units according to the foregoing method instances. For example, each function may be divided into each functional unit, or two or more functions may be integrated into one processing unit. The integrated unit may be implemented in the form of hardware or in the form of a software functional unit. It should be noted that in the present application, the division of units is illustrative and is only a logical function division, and there may be other division methods in actual implementation.

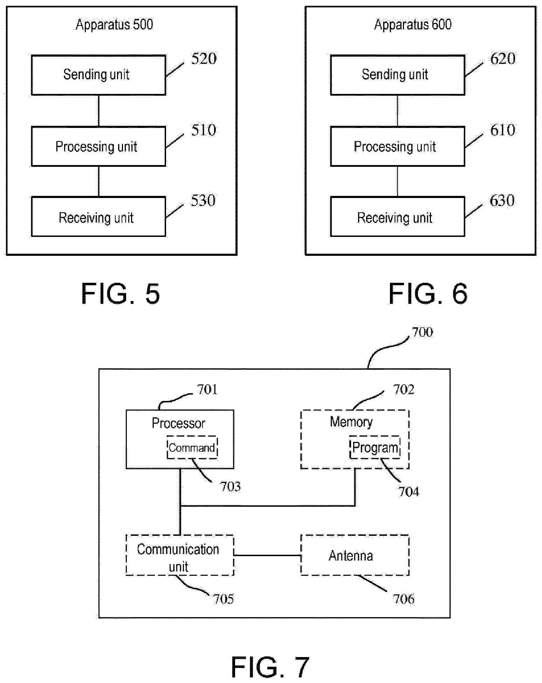

FIG. 5 is a schematic view of a structure of an apparatus for subscribing to a resource provided by the present application. An apparatus 500 includes a processing unit 510, a sending unit 520, and a receiving unit 530. The sending unit 520 may execute a sending step under the control of the processing unit 510, and the receiving unit 530 may execute a receiving step under the control of the processing unit 510.

The sending unit 520 is used for sending a request message to a target device. The request message requests that a notification condition associated with a subscribing device to be configured for a target resource.

The receiving unit 530 is used for receiving a response message for the request message from the target device.

Optionally, the response message includes indication information indicating whether the notification condition is successfully configured.

Optionally, the response message further includes the notification condition when the indication information indicates that the notification condition is successfully configured, or the response message does not include the notification condition when the indication information indicates that the notification condition is not configured successfully.

Optionally, the request message also requests to subscribe to the target resource.

Optionally, the processing unit 510 is further used for determining that the target resource supports configuring the notification condition associated with the subscribing device before the target device sends the request message.

Optionally, the request message includes the notification condition, where the notification condition is located at a query part after an URI of the request message.

Optionally, the notification condition includes at least one parameter provided as follows: a threshold for notification message generation, a minimum period between two adjacent notification messages, and a maximum period between two adjacent notification messages.

Description of the specific implementation of and beneficial effects produced by the method for subscribing to a resource executed by the apparatus 500 may be found with reference to the related description provided in the method embodiments.

FIG. 6 is a schematic view of a structure of another apparatus for subscribing to a resource provided by the present application. An apparatus 600 includes a processing unit 610, a sending unit 620, and a receiving unit 630. The sending unit 620 may execute a sending step under the control of the processing unit 610, and the receiving unit 630 may execute a receiving step under the control of the processing unit 610.

The receiving unit 630 is used for receiving a request message from a subscribing device. The request message requests that a notification condition associated with the subscribing device to be configured for a target resource.

The sending unit 620 is used for sending a response message for the request message to the subscribing device.

Optionally, the processing unit 610 is used for determining whether the target resource supports configuring the notification condition associated with the subscribing device before sending a response message for the request message to the subscribing device.

Optionally, the processing unit 610 is further used for configuring the notification condition associated with the subscribing device when the target resource supports configuring the notification condition associated with the subscribing device or determining not to configure the notification condition associated with the subscribing device when the target resource does not support configuring the notification condition associated with the subscribing device.

Optionally, the processing unit 610 is specifically used for creating an instance of the notification condition, where the instance of the notification condition includes an identifier of the subscribing device, an identifier of the target resource, and an instance identifier of the notification condition.

Optionally, the instance identifier of the notification condition is generated based on the identifier of the subscribing device.

Optionally, when the target resource supports configuring the notification condition associated with the subscribing device, the processing unit 613 is further used for determining whether to generate a notification message according to the notification condition.

Optionally, when the target resource does not support configuring the notification condition associated with the subscribing device, the response message does not include the notification condition.

Optionally, the response message includes indication information indicating whether the notification condition is successfully configured.

Optionally, the response message further includes the notification condition when the indication information indicates that the notification condition is successfully configured, or the response message does not include the notification condition when the indication information indicates that the notification condition is not configured successfully.

Optionally, the request message also requests to subscribe to the target resource.

Optionally, the request message includes the notification condition, where the notification condition is located at a query part after an URI of the request message.

Optionally, the notification condition includes at least one parameter provided as follows: a threshold for notification message generation, a minimum period between two adjacent notification messages, and a maximum period between two adjacent notification messages.

Description of the specific implementation of and beneficial effects produced by the method for subscribing to a resource executed by the apparatus 600 may be found with reference to the related description provided in the method embodiments.

FIG. 7 illustrates a schematic diagram of a structure of an Internet of Things device provided by the present application. The dotted lines in FIG. 7 indicate that the unit or the module is optional. A device 700 may be used to implement the method described in the foregoing method embodiments. The device 700 may be a terminal device, a network device, or a chip.

The device 700 includes one or more processors 701, and the one or more processors 701 may support the device 700 to implement the method in the method embodiments corresponding to FIG. 2 to FIG. 4. The processor 701 may be a general-purpose processor or a special-purpose processor. For example, the processor 701 may be a central processing unit (CPU). The CPU may be used to control the device 700, execute a software program, and process data of the software program. The device 700 may further include a communication unit 705 to implement signal input (reception) and output (transmission).

For example, the device 700 may be a chip, and the communication unit 705 may be an input and/or output circuit of the chip. Alternatively, the communication unit 705 may be a communication interface of the chip, and the chip may act as a component of a terminal device, a network device, or other wireless communication devices.

For another example, the device 700 may be a terminal device or a network device. The communication unit 705 may be a transceiver of the terminal device or the network device, or the communication unit 705 may be a transceiver circuit of the terminal device or the network device.

The device 700 may include one or more memories 702 on which a program 704 is stored. The program 704 may be run by the processor 701 to generate a command 703, so that the processor 701 executes the method described in the foregoing method embodiments according to the command 703. Optionally, the memory 702 may also store data. Optionally, the processor 701 may also read the data stored in the memory 702. The data may be stored at the same storage address as the program 704, and the data may also be stored at a different storage address from the program 704.

The processor 701 and the memory 702 may be provided separately or integrated together, for example, integrated on a system on chip (SOC) of the terminal device.

The device 700 may also include an antenna 706. The communication unit 705 is used to implement the transceiving function of the device 700 through the antenna 706.

Description of the specific implementation of the method for subscribing to a resource executed by the processor 701 may be found with reference to the related description provided in the method embodiments.

It should be understood that the steps of the foregoing method in the foregoing method embodiments may be completed by a logic circuit in a hardware form or by a command in a software form in the processor 701. The processor 701 may be a CPU, a digital signal processor (DSP), an application specific integrated circuit (ASIC), a field programmable gate array (FPGA), or other programmable logic devices such as a discrete gate, a transistor logic device, or a discrete hardware component.

The present application further provides a computer program product. When being executed by the processor 701, the computer program product implements the method described in any method embodiments in the present application.

The computer program product may be stored in the memory 702, for example, the program 704, and the program 704 is finally converted into an executable object file that may be executed by the processor 701 through processing processes such as preprocessing, compilation, assembly, and linking.

This application further provides a computer readable storage medium on which a computer program is stored. When the computer program is executed by a computer, the method described in any method embodiment in the present application is implemented. The computer program may be a high-level language program or an executable target program.

The computer readable storage medium is, for example, the memory 702. The memory 702 may be a volatile memory or a non-volatile memory, or the memory 702 may include both a volatile memory and a non-volatile memory. The non-volatile memory may be a ready-only memory (ROM), a programmable ROM (PROM), an erasable PROM (EPROM), an electrically EPROM (EEPROM), or a flash memory. The volatile memory may be a random access memory (RAM) used as an external cache. By way of exemplary but not restrictive description, many forms of the RAM are available, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DRRAM).

A person having ordinary skill in the art may clearly understand that, for the convenience and brevity of description, description of the specific working process of and the technical effects generated by the abovementioned apparatus and device may be found with reference to the description of the corresponding processes and technical effects in the foregoing method embodiments and thus is not repeated herein.

In the several embodiments provided in the present application, the disclosed system, apparatus, and method may be implemented in other ways. For example, some features of the method embodiments described above may be omitted or may not be implemented. The apparatus embodiments described above are only illustrative. The division of the units is only a logical function division, and other division methods may also be applied in actual implementation. Multiple units or components may be combined or integrated into another system. In addition, the coupling between the various units or the coupling between the various components may be direct coupling or indirect coupling, and the foregoing coupling includes electrical, mechanical, or other forms of connection.

Note that in various embodiments of the present application, the sequence numbers of the foregoing processes do not mean the order of execution. The execution sequence of each process should be determined by its function and internal logic, and should not constitute any limitation to the implementation process of the embodiments of the present application.

In addition, the terms "system" and "network" in the specification may be used interchangeably most of the time in the specification. The term "and/or" in the specification is merely an association relationship that describes the associated objects, indicating that there may be three types of relationships. For example, A and/or B may mean that: A exists alone, A and B exist at the same time, and B exists alone. Besides, the character "/" in the specification generally indicates that the associated objects before and after are in an "or" relationship.

In short, the above descriptions are only preferred embodiments of the technical solutions of the present application and are not used to limit the protection scope of the present application Any modifications, equivalent replacements, and improvements made without departing from the spirit and principles of the present application should fall within the protection scope of the present application.

## Claims

1. A method for subscribing to a resource, comprising:
sending, by a subscribing device, a request message to a target device, wherein the request message requests that a notification condition associated with the subscribing device to be configured for a target resource; and
receiving, by the subscribing device, a response message for the request message from the target device.

2. The method according to claim 1, wherein the response message comprises indication information indicating whether the notification condition is successfully configured.

3. The method according to claim 2, wherein
the response message further comprises the notification condition when the indication information indicates that the notification condition is successfully configured, or
the response message does not comprise the notification condition when the indication information indicates that the notification condition is not successfully configured.

4. The method according to any one of claims 1 to 3, wherein the request message also requests to subscribe to the target resource.

5. The method according to any one of claims 1 to 4, wherein before the step of sending, by the subscribing device, the request message to the target device, the method further comprises:
determining, by the subscribing device, that the target resource supports configuring the notification condition associated with the subscribing device.

6. The method according to any one of claims 1 to 5, wherein the request message comprises the notification condition, wherein the notification condition is located at a query part after a uniform resource identifier (URI) of the request message.

7. The method according to claim 6, wherein the notification condition comprises at least one parameter provided as follows:
a threshold for notification message generation, a minimum period between two adjacent notification messages, and a maximum period between two adjacent notification messages.

8. A method for subscribing to a resource, comprising:
receiving, by a target device, a request message from a subscribing device, wherein the request message requests that a notification condition associated with the subscribing device to be configured for a target resource; and
sending, by the target device, a response message for the request message to the subscribing device.

9. The method according to claim 8, wherein before the step of sending, by the target device, the response message for the request message to the subscribing device, the method further comprises:
determining, by the target device, whether the target resource supports configuring the notification condition associated with the subscribing device.

10. The method according to claim 9, further comprising:
configuring, by the target device, the notification condition associated with the subscribing device when the target resource supports configuring the notification condition associated with the subscribing device; or
determining, by the target device, not to configure the notification condition associated with the subscribing device when the target resource does not support configuring the notification condition associated with the subscribing device.

11. The method according to claim 10, wherein the step of configuring, by the target device, the notification condition associated with the subscribing device further comprises:
creating, by the target device, an instance of the notification condition, wherein the instance of the notification condition comprises an identifier of the subscribing device, an identifier of the target resource, and an instance identifier of the notification condition.

12. The method according to claim 11, wherein the instance identifier of the notification condition is generated based on the identifier of the subscribing device.

13. The method according to any one of claims 10 to 12, wherein when the target resource supports configuring the notification condition associated with the subscribing device, the method further comprises:
determining, by the target device, whether to generate a notification message according to the notification condition.

14. The method according to claim 10, wherein the response message does not comprise the notification condition when the target resource does not support configuring the notification condition associated with the subscribing device.

15. The method according to any one of claims 10 to 14, wherein the response message comprises indication information indicating whether the notification condition is successfully configured.

16. The method according to claim 15, wherein
the response message further comprises the notification condition when the indication information indicates that the notification condition is successfully configured, or
the response message does not comprise the notification condition when the indication information indicates that the notification condition is not successfully configured.

17. The method according to any one of claims 8 to 16, wherein the request message also requests to subscribe to the target resource.

18. The method according to any one of claims 8 to 17, wherein the request message comprises the notification condition, wherein the notification condition is located at a query part after a uniform resource identifier (URI) of the request message.

19. The method according to claim 18, wherein the notification condition comprises at least one parameter provided as follows:
a threshold for notification message generation, a minimum period between two adjacent notification messages, and a maximum period between two adjacent notification messages.

20. An apparatus for subscribing to a resource, comprising a sending unit and a receiving unit, wherein
the sending unit is used for sending a request message to a target device, wherein the request message requests that a notification condition associated with a subscribing device to be configured for a target resource, and
the receiving unit is used for receiving a response message for the request message from the target device.

21. The apparatus according to claim 20, wherein the response message comprises indication information indicating whether the notification condition is successfully configured.

22. The apparatus according to claim 21, wherein
the response message further comprises the notification condition when the indication information indicates that the notification condition is successfully configured, or
the response message does not comprise the notification condition when the indication information indicates that the notification condition is not configured successfully.

23. The apparatus according to any one of claims 20 to 22, wherein the request message also requests to subscribe to the target resource.

24. The apparatus according to any one of claims 20 to 23, further comprising a processing unit used for:
determining that the target resource supports configuring the notification condition associated with the subscribing device before the target device sends the request message.

25. The apparatus according to any one of claims 20 to 24, wherein the request message comprises the notification condition, wherein the notification condition is located at a query part after a uniform resource identifier (URI) of the request message.

26. The apparatus according to claim 25, wherein the notification condition comprises at least one parameter provided as follows:
a threshold for notification message generation, a minimum period between two adjacent notification messages, and a maximum period between two adjacent notification messages.

27. An apparatus for subscribing to a resource, comprising a sending unit and a receiving unit, wherein
the receiving unit is used for receiving a request message from a subscribing device, wherein the request message requests that a notification condition associated with the subscribing device to be configured for a target resource, and
the sending unit is used for sending a response message for the request message to the subscribing device.

28. The apparatus according to claim 27, further comprising a processing unit used for:
determining whether the target resource supports configuring the notification condition associated with the subscribing device before sending a response message for the request message to the subscribing device.

29. The apparatus according to claim 28, wherein the processing unit is further used for:
configuring the notification condition associated with the subscribing device when the target resource supports configuring the notification condition associated with the subscribing device; or
determining not to configure the notification condition associated with the subscribing device when the target resource does not support configuring the notification condition associated with the subscribing device.

30. The apparatus according to claim 29, wherein the processing unit is specifically used for:
creating an instance of the notification condition, wherein the instance of the notification condition comprises an identifier of the subscribing device, an identifier of the target resource, and an instance identifier of the notification condition.

31. The apparatus according to claim 30, wherein the instance identifier of the notification condition is generated based on the identifier of the subscribing device.

32. The apparatus according to any one of claims 29 to 31, wherein when the target resource supports configuring the notification condition associated with the subscribing device, the processing unit is further used for:
determining whether to generate a notification message according to the notification condition.

33. The apparatus according to claim 29, wherein the response message does not comprise the notification condition when the target resource does not support configuring the notification condition associated with the subscribing device.

34. The apparatus according to any one of claims 29 to 33, wherein the response message comprises indication information indicating whether the notification condition is successfully configured.

35. The apparatus according to claim 34, wherein
the response message further comprises the notification condition when the indication information indicates that the notification condition is successfully configured, or
the response message does not comprise the notification condition when the indication information indicates that the notification condition is not configured successfully.

36. The apparatus according to any one of claims 27 to 35, wherein the request message also requests to subscribe to the target resource.

37. The apparatus according to any one of claims 27 to 36, wherein the request message comprises the notification condition, wherein the notification condition is located at a query part after a uniform resource identifier (URI) of the request message.

38. The apparatus according to claim 37, wherein the notification condition comprises at least one parameter provided as follows:
a threshold for notification message generation, a minimum period between two adjacent notification messages, and a maximum period between two adjacent notification messages.

39. A subscribing device, comprising a processor and a memory, wherein the memory is used for storing a computer program, and the processor is used for calling and running the computer program stored in the memory to execute the method according to any one of claims 1 to 7.

40. A target device, comprising a processor and a memory, wherein the memory is used for storing a computer program, and the processor is used for calling and running the computer program stored in the memory to execute the method according to any one of claims 8 to 19.

41. A chip, comprising a processor used for calling and running a computer program from a memory, such that a device installed with the chip executes the method according to any one of claims 1 to 7 or the method according to any one of claims 8 to 19.

42. A computer readable storage medium, used to store a computer program, wherein the computer program enables a computer to execute the method according to any one of claims 1 to 7 or the method according to any one of claims 8 to 19.

43. A computer program product, comprising a computer program command, wherein the computer program command enables a computer to execute the method according to any one of claims 1 to 7 or the method according to any one of claims 8 to 19.

44. A computer program, wherein the computer program enables a computer to execute the method according to any one of claims 1 to 7 or the method according to any one of claims 8 to 19.
